# EUROPÄISCHE PATENTSCHRIFT

(11) **EP 2 977 640 B1**
(45) Veröffentlichungstag und Bekanntmachung des Hinweises auf die Patenterteilung: **20.03.2024**
(21) Anmeldenummer: 15178082.2
(22) Anmeldetag: 23.07.2015
(51) Int. Cl.: F16F 9/34

(54) **SCHWINGUNGSDÄMPFER**
VIBRATION ABSORBER
AMORTISSEUR D'OSCILLATIONS

(30) Priorität: 25.07.2014 DE 102014214654
(43) Veröffentlichungstag der Anmeldung: 27.01.2016
(73) Patentinhaber: Volkswagen Aktiengesellschaft, 38440 Wolfsburg (DE)
(72) Erfinder: Schlegel, Jan-Rickmer, 38108 Braunschweig (DE); Wahl, Stephan, 38154 Königslutter (DE); Tanke, Kai-Uwe, 38116 Braunschweig (DE); Lüdecke, Matthias, 38104 Braunschweig (DE); Flotmann, Stefan, 38531 Rötgesbüttel (DE)

(56) Entgegenhaltungen:
- WO-A1-2013/081004
- DE-A1- 3 518 327
- DE-A1- 3 631 714
- DE-A1- 10 020 778
- DE-C1- 4 237 156

## Beschreibung

Die Erfindung bezieht sich auf einen Schwingungsdämpfer, umfassend einen Behälter, ein Innenrohr, das in dem Behälterrohr angeordnet ist und einen Arbeitsraum bereitstellt, eine in das Innenrohr eintauchende Kolbenstange, und einen an der Kolbenstange angeordneten Kolben zur Unterteilung eines Arbeitsraumes des Schwingungsdämpfers in eine erste Arbeitskammer und eine zweite Arbeitskammer, sowie ein erstes Hydraulikventil für die Zugstufe des Schwingungsdämpfers und ein zweites Hydraulikventil für die Druckstufe des Schwingungsdämpfers sowie ein zu diesen in Reihe geschaltetes Regelventil zur Anordnung in dem Arbeitsraum des Schwingungsdämpfers, um in einem bestimmungsgemäßen Betriebsbereich des Schwingungsdämpfers ein Überströmen eines Dämpfungsmediums zwischen der ersten und zweiten Arbeitskammer sowohl in der Zugstufe als auch in der Druckstufe des Schwingungsdämpfers zu beeinflussen, und ein weiteres Ventil, das zwischen dem Innenrohr und dem Behälterrohr angeordnet ist.

Schwingungsdämpfer der eingangs genannten Bauart werden beispielsweise in Radaufhängungen von Kraftfahrzeugen eingesetzt, um Achskomponenten gegenüber dem Fahrzeugaufbau abzustützen und deren Bewegung zu dämpfen.

Über Schalt- und Steuersysteme lässt sich das Dämpfungsverhalten eines solchen Schwingungsdämpfers und insbesondere dessen Kennlinie (Dämpfungskraft in Abhängigkeit der Kolbengeschwindigkeit) in der Zug- und Druckstufe verändern.

So ist beispielsweise aus US 6,182,805 A1 ein Zweirohrdämpfer bekannt, dessen Grundkennung über ein in dem Kolben angeordnetes Dämpferventil, welches die Arbeitskammern des Arbeitsraumes miteinander verbindet, sowie über ein Bodenventil zwischen der zweiten Arbeitskammer und einer Ausgleichskammer eingestellt wird. Ferner ist dort ein Bypassventil in Form eines elektrisch betätigbaren Regelventils vorgesehen, welches eine Verbindung zwischen der ersten Arbeitskammer und der Ausgleichskammer ermöglicht. Durch Ansteuerung des Bypassventils kann das Dämpfungsverhalten des Schwingungsdämpfers verändert werden. Das aus der US 6,182,805 A1 bekannte Bypassventil ist von außen seitlich an das Behälterrohr angesetzt und steht dementsprechend weit von dem Behälterrohr ab. Abgesehen von ungünstigen Außenabmessungen des Schwingungsdämpfers besteht zudem die Gefahr von Beschädigungen des Bypassventils, welche zu einer Leckage am Schwingungsdämpfer führen können.

Ein weiterer Zweirohrdämpfer mit einem ansteuerbaren Bypassventil ist aus DE 10 2005 003 495 A1 bekannt. Auch in diesem Fall sitzt das Bypassventil am Außenumfang des Behälterrohrs. Durch eine ringförmige Ausgestaltung wird allerdings eine etwas kompaktere Bauweise erzielt.

Weiterhin ist aus EP 1 355 081 A1 ein Zweirohrdämpfer bekannt, bei dem die Grundkennung des Dämpfers über ansteuerbare Dämpferventile einstellbar ist, welche innerhalb der Ausgleichskammer angeordnet sind und mit Überströmkanälen in einer Kolbenstangenführung oder einem Dämpferboden zusammenwirken. Ein zusätzliches Bypassventil ist in diesem Fall nicht vorgesehen. Kommt es zu einem Ausfall der Stromversorgung der Dämpferventile, kann zwar unter Umständen eine Grundfunktion des Schwingungsdämpfers aufrechterhalten werden. Diese bleibt jedoch in Bezug auf die Dämpferkennung weit hinter Schwingungsdämpfern gemäß US 6,182,805 A1 und DE 10 2005 003 495 A1 zurück, welche zu diesem Zweck weniger störempfindliche mechanische Dämpferventile verwenden.

Weiterhin ist aus DE 100 20 778 A1 ein Zweirohrdämpfer bekannt, dessen Hydraulikventile für die Zug- und Druckstufe auf gegenüberliegenden Seiten des Kolbens angeordnet sind. Jedes Hydraulikventil weist dabei ein Hauptscheibenventil auf, welches bei großen Kolbengeschwindigkeiten öffnet, sowie ein Nebenscheibenventil, welches bei geringen Kolbengeschwindigkeiten wirksam ist. Ein Regelventil erstreckt sich durch den Kolben hindurch, um den Durchfluss durch die Nebenscheibenventile zu beeinflussen. Dies bedingt einen verhältnismäßig großen Durchmesser der Ventil-Kolben-Anordnung, wodurch wiederum das Innenrohr eines Zweirohrdämpfers als auch das dieses aufnehmende Behälterrohr mit einem großen Durchmesser ausgeführt werden müssen. Ein großer Außendurchmesser des Schwingungsdämpfers ist jedoch beispielsweise im Hinblick auf den Einbau in eine Kraftfahrzeugradaufhängung unter Umständen unvorteilhaft.

In DE 103 16 957 B3 wird in Figur 2 ein Schwingungsdämpfer beschrieben, welcher zusätzlich zu am Kolben angeordneten Hydraulikventilen, welche die Grundkennung des Dämpfers festlegen, eine an der Kolbenstange vorgesehene Hydraulikeinheit mit einem Regelventil aufweist. Diese Hydraulikeinheit weist einen in einem Gehäuse axial beweglichen Trennkolben auf, an dem Zusatzventile angeordnet sind. Über den Trennkolben und die diesem zugeordneten Zusatzventile sollen insbesondere hochfrequente Anregungen herausgefiltert werden.

Die härteste Dämpferkennlinie ergibt sich bei abgeschalteter Hydraulikeinheit durch Schließen des Regelventils und Deaktivierung des Trennkolbens. Wird eine weiche Kennlinie gewünscht, erfolgt deren Einstellung über die Hydraulikventileinheit.

In DE 10 2008 043 564 A1 wird im Kontext eines Einrohrdämpfers eine Ventilanordnung beschrieben, bei der die Grundkennung für die Zug- und Druckstufe durch an einem Kolben angeordnete Hydraulikventile bestimmt wird. Weiterhin ist eine semi-aktive Hydraulikeinheit an der Kolbenstange vorgesehen, welche ein erstes Hydraulikventil für die Zugstufe des Schwingungsdämpfers und ein zweites Hydraulikventil für die Druckstufe des Schwingungsdämpfers sowie ein zu diesen in Reihe geschaltetes Regelventil im Arbeitsraum des Schwingungsdämpfers aufweist. Über die Hydraulikeinheit kann in der Zug- und Druckstufe eine weiche Dämpferkennung eingestellt werden.

In der nachveröffentlichten deutschen Patentanmeldung DE 10 2014 214 654 A1 vom 25.07.2014 wurde ein gattungsgemäßer Zweirohrdämpfer vorgeschlagen, welcher eine besonders schlanke Ausgestaltung eines semi-aktiven Schwingungsdämpfers ermöglicht.

Der vorliegenden Erfindung liegt die Aufgabe zugrunde, einen solchen gattungsgemäßen Schwingungsdämpfer weiter zu verbessern.

Diese Aufgabe wird durch einen Schwingungsdämpfer gemäß Patentanspruch 1 gelöst. Der erfindungsgemäße Schwingungsdämpfer zeichnet sich dadurch aus, dass das erste und zweite Zusatzventil als Überlastventile zum Schutz des Regelventils konfiguriert sind und weiterhin zumindest das zweite Zusatzventil für die Druckstufe einen einer Überlastschwelle des Regelventils vorgelagerten Arbeitsbereich aufweist, welcher den Arbeitsbereich des weiteren Ventils überlappt, um das durch das weitere Ventil sowie das Regelventil im bestimmungsgemäßen Betriebsbereich des Schwingungsdämpfers bestimmte Dämpfungsverhalten in der Druckstufe zu beeinflussen.

Durch die Überlastschutzfunktion wird das Regelventil vor zu hohen Volumenströmen geschützt.

Mittels der erfindungsgemäßen Zusatzventile besteht ferner die Möglichkeit einer weitergehenden Modifikation der Dämpferkennlinien in der Zug- und Druckstufe. Hierdurch kann beispielsweise Kavitation in den Arbeitskammern, insbesondere während der Druckstufe in der kolbenstangenseitigen Arbeitskammer eines Schwingungsdämpfers hydraulisch vermindert oder vollständig verhindert werden. Dies gestattet wiederum, das Regelventil mit einem großen Arbeitsbereich auszulegen, so dass sich bei Zugkräften eine große Kennlinienspreizung erzielen lässt.

Weiterhin lassen sich durch die Zusatzventile unerwünschte Kennlinieneinflüsse des Regelventils abschwächen. So kann beispielsweise ein Überschwingeffekt des Regelventils abgemildert werden. Gleiches gilt für stark ausgeprägte Nichtlinearitäten im Durchströmverhalten des Regelventils. Im Unterschied zu DE 103 16 957 B3 kommt die erfindungsgemäße Lösung ohne aufwändigen Trennkolben aus.

Vorteilhafte Ausgestaltungen der Erfindung sind Gegenstand weiterer Patentansprüche.

Insbesondere können die in der Druckstufe wirksamen Ventile derart abgestimmt sein, dass der Gesamtdruckverlust an dem zweiten Hydraulikventil und dem zweiten Zusatzventil zusammen kleiner ist als der Druckverlust an dem weiteren Ventil. Dies ist für die Vermeidung von Kavitation bei großen Kolbengeschwindigkeiten in der oberen Arbeitskammer von Vorteil.

Weiterhin kann das zweite Zusatzventil bei kleineren Kolbengeschwindigkeiten und/oder kleineren Beträgen des Differenzdrucks zwischen den Arbeitskammern öffnen als das erste Zusatzventil.

Das erste Zusatzventil kann in diesem Fall gegebenenfalls als reines Überlastventil zum Schutz des Regelventils betrieben werden, wohingegen das zweite Zusatzventil neben dem Überlastschutz eine Kennlinienmodifikation im Betriebsbereich der Druckstufe bewirkt.

Vorzugsweise öffnen das erste und zweite Zusatzventil bereits bei einem Differenzdruck, welcher von der Überlastschwelle, welche zum Schutz des Regelventils erforderlich ist, beabstandet ist. Der Überlastbetrieb ist somit funktional deutlich von der Kennlinienmodifikation im bestimmungsgemäßen Betriebsbereich getrennt und dadurch gut separat abstimmbar.

Insbesondere können das weitere Ventil, die Hydraulikventile und Zusatzventile derart aufeinander abgestimmt sein, dass im Parallelbetrieb innerhalb des bestimmungsgemäßen Betriebsbereichs des Schwingungsdämpfers der Hauptvolumenstrom über das jeweilige Bodenventil und Hydraulikventil geführt ist. Die maßgebliche Kennlinienfestlegung erfolgt somit weiterhin über das Bodenventil und die Hydraulikventile im Zusammenspiel mit dem Regelventil.

Über die Einstellung des Durchströmquerschnitts des Regelventils kann beispielsweise bei geringem Durchströmquerschnitt ein sportlicher Kennlinienverlauf und bei größerem Durchströmquerschnitt ein mehr komfortorientierter Kennlinienverlauf eingestellt werden.

Hierdurch kann beispielsweise in einer Radaufhängung zwischen einer sportlich harten oder einer komfortbetonten weichen Abstimmung gewählt werden. Zudem ist die Möglichkeit beliebiger Zwischenstufen gegeben, die einem Fahrer angeboten werden können. Die Einstellung erfolgt dabei über die Ansteuerung des einen Regelventils.

Letzteres kann beispielsweise als Proportionalmagnetventil mit Druck- und/oder Volumenstromregelung ausgeführt sein.

Weiterhin können das weitere Ventil, die Hydraulikventile und die Zusatzventile derart aufeinander abgestimmt sein, dass das erste Hydraulikventil der Zugstufe vor dem zugehörigen Zusatzventil öffnet und das weitere Ventil und zweite Hydraulikventil der Druckstufe vor dem zugehörigen Zusatzventil öffnet. Bei geringen Kolbengeschwindigkeiten wird hierdurch der Kennlinienverlauf allein durch die kennlinienrelevanten Hydraulikventile einschließlich des weiteren Ventils und das Regelventil bestimmt, bevor bei höheren Kolbengeschwindigkeiten die Zusatzventile den Kennlinienverlauf im bestimmungsgemäßen Betriebsbereich des Schwingungsdämpfers mit beeinflussen.

Gemäß einer weiteren Ausgestaltung des Schwingungsdämpfers ist das Regelventil derart ausgebildet, dass dieses ab einer bestimmten Kolbengeschwindigkeit, d.h. einem bestimmten Volumenstrom, einen weiteren Querschnitt frei schaltet. Die Zusatzventile sind in diesem Fall bevorzugt derart abgestimmt, um durch Freigabe eines entsprechenden Öffnungsquerschnitts im Bereich eines durch die vorgenannte Querschnittsfreischaltung verursachten Knicks der Dämpferkennlinie eine Kennlinienausrundung zu bewirken, wodurch das Fahrverhalten verbessert wird.

Im Hinblick auf eine schlanke und kompakte Bauweise können die Zusatzventile einen ringförmig ausgebildeten Ventilkörper mit einem Ventilsitz und einer oder mehreren Drosselöffnungen, mindestens eine Feder und ein ringförmig ausgebildetes Schließorgan umfassen, wobei letzteres in Schließstellung durch die Feder gegen den Ventilsitz des Ventilkörpers gedrückt ist, um die eine oder mehreren Drosselöffnungen zu versperren.

Gemäß einer vorteilhaften Ausgestaltung umfasst die mindestens eine Feder eine ringförmig ausgebildete Wellfeder, welche sich durch einen besonders geringen Bauraumbedarf auszeichnet. Es ist insbesondere auch möglich, mehrere Wellfedern in Reihe anzuordnen.

Bei einem Zusatzventil, das nicht ausschließlich als Überlastventil für das Regelventil zum Einsatz kommt, sondern auch im normalen Fahrbereich betrieben wird, ist eine hohe Funktionsstreuung in Bezug auf das auf Öffnungs- und Schließverhalten problematisch, da bei Verwendung einer verhältnismäßig steifen Feder wie beispielsweise einer Wellfeder bereits bei kleinen geometrischen Unterschieden im Vorspannweg große Schwankungen im Öffnungspunkt des Ventils auftreten können, welche sich unvorteilhaft auf den Kennlinienverlauf auswirken würden.

Die erfindungsgemäße Konfiguration ermöglicht es nun, die Zusatzventile im bestimmungsgemäßen Betriebsbereich zum einen weniger streuungsanfällig und vor allem schnell und variabel anpassbar an geänderte Rahmenbedingungen im Fahrzeug zu gestalten.

Gemäß einer vorteilhaften Ausgestaltung weist das betreffende Zusatzventil eine Distanzscheibe zur Einstellung der Vorspannkraft der Wellfeder auf. Hierdurch lassen sich in der Serienfertigung mit geringem Aufwand variierende Federsteifigkeiten im Hinblick auf ein einheitliches Öffnungsverhalten ausgleichen.

Gemäß einer vorteilhaften Ausgestaltung der Erfindung kann das Öffnungs- und Schließverhalten der Zusatzventile in Bezug auf das weitere Ventil und die Hydraulikventile durch folgende Maßnahmen schnell und einfach abgestimmt werden, nämlich durch:
- die Anzahl und/oder der Querschnitt der Drosselöffnungen, und/oder
- die Dicke der Distanzscheibe und/oder Anzahl von Distanzscheiben, und/oder
- die Steifigkeit der mindestens einen Wellfeder.

Die vorstehend erläuterten Schwingungsdämpfer sind nicht auf den Einsatz im Fahrzeugbau beschränkt, sondern können in anderen technischen Strukturen zur Schwingungsdämpfung eingesetzt werden. Lediglich beispielhaft seien hier Bauwerke wie Gebäude, Brücken und dergleichen genannt.

Nachfolgend wird die Erfindung anhand von in der Zeichnung dargestellten Ausführungsbeispielen näher erläutert. Die Zeichnung zeigt in:
- Figur 1: ein Ausführungsbeispiel für einen Schwingungsdämpfer nach der Erfindung,
- Figur 2: einen Hydraulikschaltplan des Schwingungsdämpfers gemäß Fig. 1,
- Figur 3: eine Detailansicht des Schwingungsdämpfers gemäß Fig. 1,
- Figur 4: den Kennlinienverlauf des Schwingungsdämpfers in der Zug- und Druckstufe für einen harte und eine weiche Abstimmung,
- Figur 5: ein zweites Ausführungsbeispiel für die Ventil-Kolben-Anordnung des Schwingungsdämpfers, und in
- Figur 6: eine schematische Darstellung eines Zusatzventils im Schnitt.

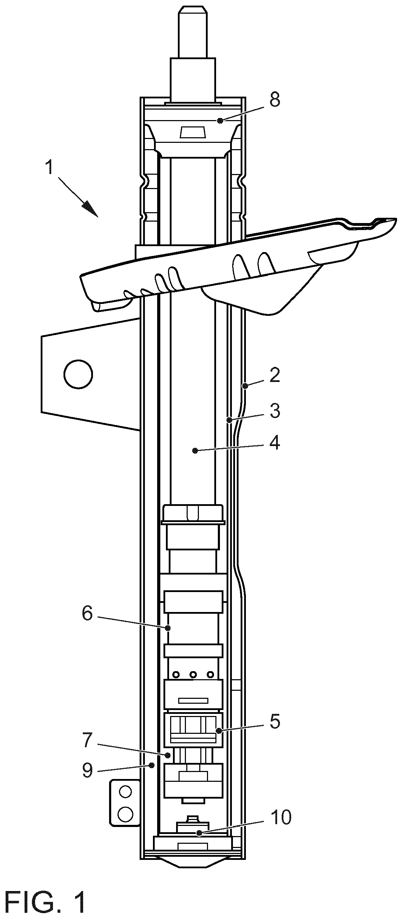

Figur 1 zeigt einen Schwingungsdämpfer 1, der als Zweirohrdämpfer für eine Kraftfahrzeugradaufhängung ausgebildet ist.

Der Schwingungsdämpfer 1 umfasst einen Behälter 2, vorzugsweise ein Behälterrohr, in das ein Innenrohr 3 eingesetzt ist.

Das Innenrohr 3 ist zylindrisch ausgebildet und an seinem unteren Ende verschlossen. In das Innenrohr 3 erstreckt sich eine Kolbenstange 4 mit einem an der Innenwand des Innenrohrs 3 geführten und gegen diese abdichtenden Kolben 5.

Der Kolben 5 unterteilt einen Arbeitsraum innerhalb des Innenrohrs 3 in eine erste Arbeitskammer 6 und eine zweite Arbeitskammer 7, die jeweils mit einem Dämpfungsmedium wie beispielsweise einem Hydrauliköl gefüllt sind. Zur Begrenzung der oberen ersten Arbeitskammer 6 ist das Innenrohr 3 durch eine Kolbenstangenführung 8 verschlossen, die sich an einem oberen Stirnende des Innenrohrs 3 abstützt.

Die Kolbenstangenführung 8 weist eine Öffnung für die Kolbenstange 4 auf. Zudem ist im Bereich der Kolbenstange 4 eine ebenfalls nicht näher dargestellte Gleitdichtung vorgesehen.

Die untere zweite Arbeitskammer 7 ist axial durch ein Bodenventil 10 verschlossen, das an das untere Stirnende des Innenrohrs 3 angesetzt ist.

Zwischen der Innenwand des Behälterrohrs 2 und der Außenwand des Innenrohrs 3 wird ein Ausgleichsraum 9 gebildet, welcher über das Bodenventil 10 mit der zweiten Arbeitskammer 7 in Verbindung steht.

Weiterhin umfasst der Schwingungsdämpfer 1 zwischen den Arbeitskammern 6 und 7 angeordnete Ventile, über deren Öffnungsverhalten in Verbindung mit dem Bodenventil 10 im bestimmungsgemäßen Betriebsbereich des Schwingungsdämpfers 1 dessen Charakteristik in der Zug- und Druckstufe eingestellt wird. Anstelle des Bodenventils 10 kann ein entsprechendes Ventil auch an anderer Stelle zwischen mindestens einer der Arbeitskammern 6, 7 und dem Ausgleichsraum 9 vorgesehen sein.

Unter Zugstufe wird vorliegend ein Zustand verstanden, bei dem die Kolbenstange 4 mit dem Kolben 5 in Richtung aus dem Innenrohr 3 heraus bewegt wird. Hierbei steigt der Druck in der ersten Arbeitskammer 6 an, während der Druck in der zweiten Arbeitskammer 7 abfällt. Die Druckstufe ist hingegen durch ein Einschieben der Kolbenstange 4 in das Innenrohr 3 mit umgekehrten Druckverhältnissen gekennzeichnet.

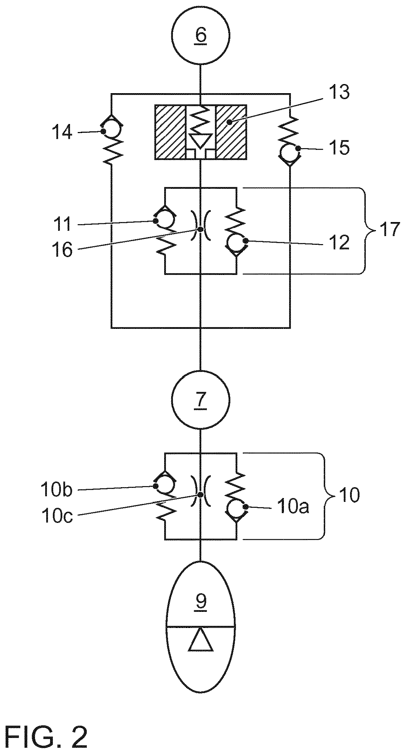

Ein hydraulisches Schaltbild ist Figur 2 zu entnehmen. Zusätzlich zu dem Bodenventil 10 sind dort weiterhin ein erstes und zweites Hydraulikventil 11 und 12, - jeweils eines für die Zugstufe und eines für die Druckstufe -, sowie ein Regelventil 13 und ein erstes und zweites Zusatzventil 14 und 15, - jeweils eines für die Zugstufe und eines für die Druckstufe -, zu erkennen. Weiterhin ist bei Bezugszeichen 16 ein Voröffnungsquerschnitt angedeutet.

Das erste und zweite Hydraulikventil 11 und 12 sind zu dem Regelventil 13 hydraulisch in Reihe geschaltet. Sie sind wie das Regelventil 13 im Arbeitsraum des Schwingungsdämpfers 1 angeordnet, um ein Überströmen eines Dämpfungsmediums zwischen der ersten und zweiten Arbeitskammer 6 und 7 sowohl in der Zugstufe als auch in der Druckstufe zu beeinflussen.

Das erste und zweite Zusatzventil 14 und 15 sind hingegen hydraulisch parallel zu dem ersten und zweiten Hydraulikventil 11 und 12 sowie dem Regelventil 13 geschaltet. Auch die Zusatzventile 14 und 15 verbinden jeweils die erste und zweite Arbeitskammer 6, 7. Sie sind jedoch so eingestellt, dass diese im Vergleich zu den Hydraulikventilen 11 und 12 erst bei höheren Druckdifferenzen und Kolbengeschwindigkeiten öffnen.

Das Regelventil 13 gestattet durch entsprechende elektrische Ansteuerung eine Druck- und/oder Volumenstromregelung. Es kann beispielsweise als Proportionalmagnetventil ausgeführt sein.

Das erste Hydraulikventil 11 öffnet in der Zugstufe und ermöglicht bei entsprechender Ansteuerung des Regelventils 13 dann ein Überströmen von Dämpfungsmedium aus der ersten Arbeitskammer 6 in die zweite Arbeitskammer 7. In Gegenrichtung, das heißt in der Druckstufe sperrt das erste Hydraulikventil 11 hingegen ab. Das zweite Hydraulikventil 12 öffnet in der Druckstufe und schließt in der Zugstufe, vorausgesetzt, das Regelventil 13 ist entsprechend geöffnet. Über den Öffnungsgrad des Regelventils 13 lässt sich die Charakteristik des Schwingungsdämpfers 1 beeinflussen.

Die parallel hierzu angeordneten Zusatzventile 14 und 15 öffnen entsprechend, das heißt das erste Zusatzventil 14 öffnet in der Zugstufe und schließt in der Druckstufe, während das zweite Zusatzventil 15 in der Druckstufe öffnet und in der Zugstufe schließt.

Den Zusatzventilen 14 und 15 kommen vorliegend zwei Funktionen zu. Zum einen dienen diese als Überlastventile, um das Regelventil 13 vor zu großen Volumenströmen bei plötzlich auftretenden hohen Druckdifferenzen zwischen den Arbeitskammern 6 und 7 und großen Kolbengeschwindigkeiten außerhalb des bestimmungsgemäßen Betriebsbereichs des Schwingungsdämpfer 1, welche weit außerhalb des normalen Fahrbetriebs auftreten, zu schützen.

Zum anderen ist zumindest das zweite Zusatzventil 15 derart konfiguriert, dass dieses einen einer Überlastschwelle des Regelventils 13 vorgelagerten Arbeitsbereich aufweist, welcher den Hauptarbeitsbereich des Bodenventils 10 sowie des zweiten Hydraulikventils 12 überlappt. Die Überlastschwelle des Regelventils 13 ist mit einem Sicherheitsabstand zur Festigkeitsgrenze des Regelventils 13 gewählt, so dass bei einem Ansprechen der Überlastfunktion des zweiten Zusatzventils 15 das Regelventil 13 nicht beschädigt wird. Das zweite Zusatzventil 15 beeinflusst somit das durch das Bodenventil 10 und zweite Hydraulikventil 12 sowie das Regelventil 13 bestimmte Überströmen des Dämpfungsmediums zwischen den Arbeitskammern 6 und 7 und dem Arbeitsraum 9 im bestimmungsgemäßen Betriebsbereich des Schwingungsdämpfers 1. Während die Ventile 10 und 12 bereits bei kleinen Kolbengeschwindigkeiten eine Dämpferkraft erzeugen, macht sich die Drosselwirkung des Regelventils 13 vor allem bei höheren Kolbengeschwindigkeiten, bei denen über die Ventile 10 und 12 kein großer Zugewinn an Dämpferkraft mehr erreicht wird, bemerkbar.

Gegebenenfalls kann auch das erste Zusatzventil 14 derart konfiguriert werden, dass dieses in der Zugstufe einen einer Überlastschwelle des Regelventils 13 vorgelagerten Arbeitsbereich aufweist, welcher den Hauptarbeitsbereich des ersten Hydraulikventils 11 überlappt. Jedoch kann das erste Zusatzventil 14 auch als reines Überlastventil konfiguriert werden, das lediglich bei Erreichen der Überlastschwelle anspricht, um das Regelventil 13 in der Zugstufe zu schützen.

Es besteht somit die Möglichkeit einer unabhängigen Kennlinienmodifikation in der Zug- und Druckstufe durch die Zusatzventile 14 und 15, welche neben dem Überlastschutz eine zusätzliche Funktion bieten.

Aufgrund der überlappenden Arbeitsbereiche ist im bestimmungsgemäßen Betriebsbereich des Schwingungsdämpfers 1 zumindest bei höheren Differenzdrücken oder Kolbengeschwindigkeiten für die Zug- und Druckstufe jeweils ein Parallelbetrieb der kennlinienprägenden Ventile 10 und 11 mit den Zusatzventilen 14 und 15 möglich. Dabei können das Bodenventil 10, die Hydraulikventile 11 und 12 und die Zusatzventile 14 und 15 derart aufeinander abgestimmt sein, dass im Parallelbetrieb der Hauptvolumenstrom in der Zugstufe über das erste Hydraulikventil 11 und in der Druckstufe über das Bodenventil 10 geführt ist. Das zweite Hydraulikventil 12 weist in der Druckstufe lediglich einen geringen Einfluss auf die Dämpferkennlinie auf.

Ferner ist die Abstimmung derart vorgenommen, dass das erste Hydraulikventil 11 der Zugstufe vor dem zugehörigen Zusatzventil 14 öffnet und das Bodenventil 10 und das zweite Hydraulikventil 12 der Druckstufe vor dem zugehörigen Zusatzventil 15 öffnen.

Die Hydraulikventile 11 und 12 sowie die Zusatzventile 14 und 15 können als mechanische Rückschlagventile ausgebildet werden. Vorzugsweise kommen zumindest für die Hydraulikventile 11 und 12 Ventile zum Einsatz, welche als Schließorgane jeweils eine oder mehrere Ventilscheiben aufweisen. Geeignete Ventilscheiben-Ventile, über die das Verhalten des Schwingungsdämpfers 1 in der Zug- und Druckstufe eingestellt werden kann, sind aus dem Stand der Technik allgemein bekannt und müssen daher nicht näher erläutert werden.

Über das Bodenventil 10 wird vor allem die durch die Kolbenstange 4 bedingte Volumenänderung im Arbeitsraum des Innenrohrs 3 ausgeglichen. Das Bodenventil 10 weist dementsprechend ebenfalls ein erstes Ventil 10a für die Zugstufe und ein zweites Ventil 10b für die Druckstufe auf. Zudem kann an diesem zusätzlich ein Voröffnungsquerschnitt 10c vorgesehen sein. Über das erste Ventil 10a kann Dämpfungsmedium aus dem Ausgleichsraum 9 angesaugt werden. In Gegenrichtung sperrt dieses Ventil hingegen ab. Das zweite Ventil 10b des Bodenventils 10 gestattet ein Überströmen von Dämpfungsmedium aus der zweiten Arbeitskammer 7 in den Ausgleichsraum 9. Auch die Ventile 10a und 10b sind vorzugsweise in der Art mechanischer Rückschlagventile ausgebildet.

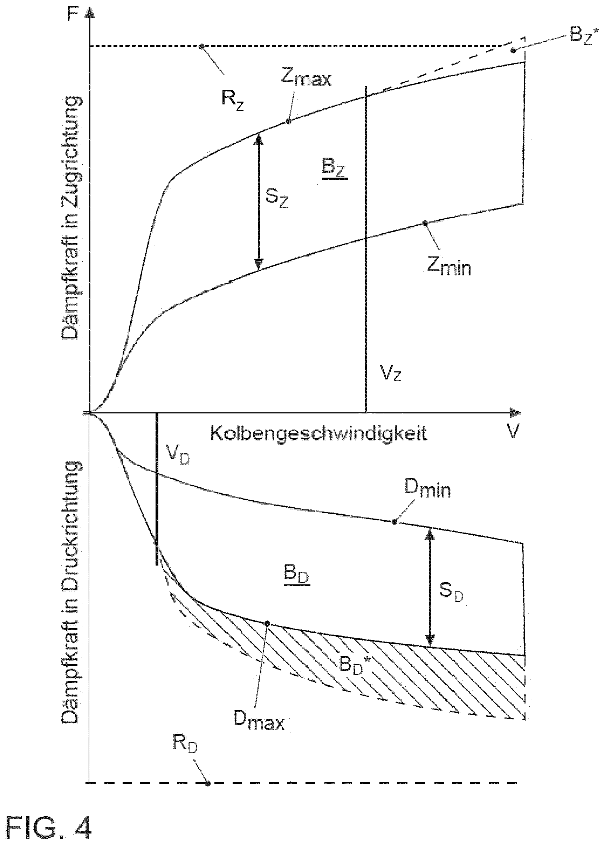

Die vorstehend erläuterte hydraulische Schaltung ermöglicht eine starke Spreizung Sz und S_{D} der Dämpferkennlinien in der Zug- und Druckstufe, wie dies in Figur 4 dargestellt ist. Mit Zₘᵢₙ und Dₘᵢₙ sind die jeweils weichsten Kennlinien für eine komfortbetonte Dämpferabstimmung in der Zug- und Druckstufe bezeichnet. Diese werden bei maximal geöffnetem Regelventil 13 erhalten. Die härtesten Kennlinien für eine sportliche Abstimmung sind mit Zₘₐₓ und Dₘₐₓ bezeichnet. Sie ergeben sich bei minimal geöffnetem Regelventil 13. Sowohl in der Zugstufe als auch in der Druckstufe ist das Regelventil 13 immer geöffnet, bei sportlicher Abstimmung allerdings lediglich mit seinem kleinsten Querschnitt.

Das erste Hydraulikventil 11 legt die untere Grenzkennlinie Zₘᵢₙ in der Zugstufe fest. Hierbei ist gleichzeitig das Regelventil 13 maximal geöffnet.

Bei minimalem Querschnitt stellt sich die obere Grenzkennlinie Zₘₐₓ in der Zugstufe ein. Dabei ist das Regelventil 13 mit seinem kleinsten Querschnitt geöffnet, so dass über das erste Hydraulikventil 11 ein stark gedrosselter Austausch von Dämpfungsmedium erfolgt. Über das erste Zusatzventil 14 wird die obere Grenzkennlinie Zₘₐₓ in der Zugstufe begrenzt.

In Figur 4 ist der bestimmungsgemäße Betriebsbereich der Dämpferkennlinie in der Zugstufe mit B_{z} bezeichnet. Dieser wird durch die untere Grenzkennlinie Zₘᵢₙ und die obere Grenzkennlinie Zₘₐₓ definiert. Er ergibt sich durch entsprechende Abstimmung des ersten Hydraulikventils 11 im Zusammenspiel mit dem Regelventil 13 sowie des ersten Zusatzventils 14 und stellt praktisch eine Schar mit einer Vielzahl von Kennlinien dar. Durch entsprechende Ansteuerung des Regelventils 13 wird jeweils eine dieser Kennlinien eingestellt. Weiterhin ist in Figur 4 in der Zugstufe ein Überlastbereich B_{z}* zu erkennen, welcher bei Überschreiten einer vorgegebenen Kolbengeschwindigkeit v_{z} ohne Eingriff durch das erste Zusatzventil 14 erreicht werden würde. Durch Öffnen des ersten Zusatzventils 14 in diesem Bereich werden die maximalen Dämpfungskräfte abgesenkt, um das Regelventil 13 zu schützen. Dessen Festigkeitsgrenze in der Zugstufe ist anhand der Kennlinie R_{z} eingezeichnet.

Die weichste Kennlinie Dₘᵢₙ in der Druckstufe wird durch das zweite Ventil 10b des Bodenventils 10 bestimmt.

Das zweite Zusatzventil 15 begrenzt die Maximalkennlinie Dₘₐₓ der Druckstufe. Dabei sind das zweite Zusatzventil 15 und das zweite Ventil 10b des Bodenventils 10 derart aufeinander abgestimmt, dass der generierte Druckverlust am Kolben 5 und damit primär an dem zweiten Zusatzventil 15 kleiner ist als an dem zweiten Ventil 10b des Bodenventils 10. Hierdurch wird auf hydraulischem Wege einer Kavitationsbildung in der oberen ersten Arbeitskammer 6 entgegengewirkt.

In Figur 4 ist der bestimmungsgemäße Betriebsbereich der Dämpferkennlinie in der Druckstufe mit B_{D} bezeichnet. Dieser wird durch die weichste Kennlinie Dₘᵢₙ und die härteste Maximalkennlinie Dₘₐₓ definiert und repräsentiert auch hier wieder eine Kennlinienschar, wobei die jeweilige Kennlinie über das Regelventil 13 ausgewählt wird. Erfindungsgemäß öffnet das zweite Zusatzventil 15 der Druckstufe früher, d.h. bei kleineren Differenzdruckbeträgen zwischen den Arbeitskammern 6 und 7, als das erste Zusatzventil 14 der Zugstufe. Hierdurch wird ein homogenerer Kennlinienverlauf mit weniger stark ausgeprägtem Kennlinienknick im degressiven Verlauf zu höheren Kolbengeschwindigkeiten hin erzielt. Durch das frühere Öffnen des zweiten Zusatzventils 15 werden die Dämpferkräfte reduziert.

In Figur 4 ist dies anhand eines Vergleichs mit dem schraffierten Bereich B_{D}* zu erkennen, welcher sich einstellen würde, wenn man das zweite Zusatzventil 15 ausschließlich als Überlastschutz ausgestalten würde. Vorliegend ist dessen Öffnungsschwelle in der Druckstufe zu geringeren Kolbengeschwindigkeiten hin derart abgesenkt, dass zweite Zusatzventil 15 zusätzlich der Modifikation der Dämpferkennlinienschar in der Druckstufe zwecks Kennlinienausrundung und Kavitationsvermeidung dient. Der Überlastschutz für das Regelventil 13, dessen Festigkeitsgrenze in der Druckstufe mit R_{D} eingezeichnet ist, bleibt wie in der Zugstufe aufrechterhalten.

Über das Regelventil 13 kann, beispielsweise durch proportionale Regelung des Volumenstroms, ein Kennlinienverlauf im Bereich der Spreizung Sz bzw. S_{D} eingestellt werden.

Das Regelventil 13 kann derart ausgebildet sein, dass ab einer bestimmten Kolbengeschwindigkeit das Regelventil 13 einen weiteren Querschnitt frei schaltet, um eine typische konventionelle Dämpferkennlinie eines passiven Schwingungsdämpfers zu simulieren. Dadurch kommt es zu einem unerwünschten Knick in der Kennlinie. Vorliegend können die Zusatzventile 14 und 15 derart abgestimmt sein, dass durch Freigabe eines entsprechenden Öffnungsquerschnitts im Bereich des Knicks eine Kennlinienausrundung erzielt wird.

Wie Figur 4 weiter zeigt, weist die Ventil-Kolben-Anordnung in der Zugstufe eine große Kennlinienspreizung Sz auf. Um dies zu ermöglichen, muss das Regelventil 13 in Bezug auf die darstellbaren Volumenströme einen großen Arbeitsbereich aufweisen. Dieser große Arbeitsbereich erzeugt ohne weitere Maßnahmen in der Druckstufe Kavitation und führt somit zu Krafteinbrüchen im Dämpfer durch zu große Druckverluste am Kolben. Dies kann softwaretechnisch unterbunden werden. Für das Fahrverhalten zu bevorzugen ist jedoch eine hydraulische Lösung durch entsprechende Gestaltung des Öffnungsverhaltens des zweiten Zusatzventils 15 im Hinblick auf das Bodenventil 10 wie vorstehend erläutert.

Der Voröffnungsquerschnitt 16 der Hydraulikventile und der Voröffnungsquerschnitt 10c des Bodenventils 10 bestimmen den Kennlinienverlauf bei niedrigen Dämpfergeschwindigkeiten, bevor das Bodenventil 10 und die Hydraulikventile 11 und 12 öffnen.

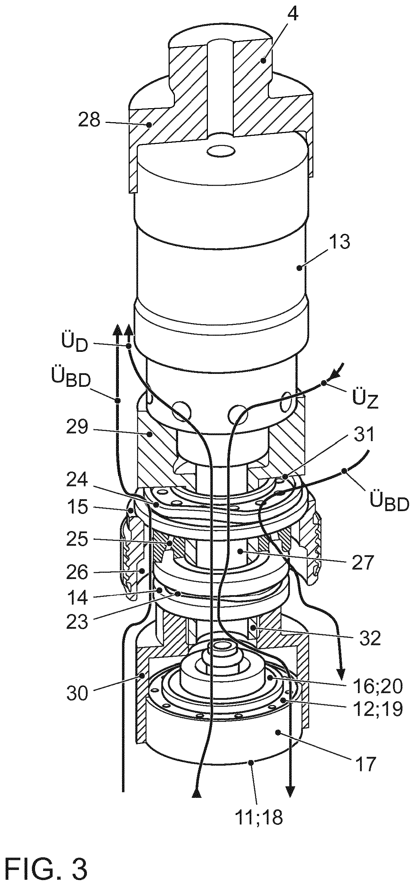

Figur 3 zeigt eine Ventil-Kolben-Anordnung, bei der die Hydraulikventile 11 und 12 als gegenläufig öffnende, vorgespannte Ventilscheibenpakete ausgebildet sind. Das zweite Hydraulikventil 12 arbeitet vorwiegend als Rückschlagventil, während das erste Hydraulikventil 11 in der Zugstufe die entsprechende Kennlinie trägt.

Die Vorspannung der beiden Hydraulikventile 11 und 12 bestimmt die Druckdifferenz, ab welcher diese zu öffnen beginnen. Im Minimalfall ist je Hydraulikventil 11 und 12 bereits eine Ventilscheibe 18 bzw. 19 ausreichend. Der Voröffnungsquerschnitt 16 kann wahlweise an einem der beiden Hydraulikventile 11 und 12 vorgesehen werden, beispielsweise durch eine Voröffnungsscheibe 20 am ersten Hydraulikventil 11.

Auch die Zusatzventile 14 und 15 können als gegenläufig öffnende, vorgespannte Scheibenventile ausgeführt werden. Bei dem in Figur 3 dargestellten Ausführungsbeispiel sind diese jeweils durch eine Feder 23 bzw. 24 gegen einen entsprechenden Ventilsitz vorgespannt, um entsprechende Überströmkanäle 25 und 26, welche sich durch den Kolben 5 hindurch erstrecken, abzusperren.

Wie Fig. 3 ferner entnommen werden kann, liegen das Hydraulikventil 11 für die Zugstufe und das Hydraulikventil 12 für die Druckstufe auf der gleichen Seite des Kolbens 5. Sie bilden hier eine vormontierbare Baueinheit 17. Diese Baueinheit 17 und das Regelventil 13 sind in dem Arbeitsraum des Schwingungsdämpfers hydraulisch in Reihe geschaltet, um das Überströmen des Dämpfungsmediums zwischen der ersten und zweiten Arbeitskammer 6 und 7 sowohl in einer Zugstufe als auch in einer Druckstufe des Schwingungsdämpfers zu beeinflussen, wie dies vorstehend erläutert wurde.

Hieraus ergibt sich für die Zugstufe und die Druckstufe jeweils ein Überströmweg Üz und Ü_{D} durch die Hydraulikventile 11 und 12 und das Regelventil 13. Vorzugsweise verfügen beide Überströmwege Üz und Ü_{D} über einen gemeinsamen Wegabschnitt, welcher durch den Kolben 5 verläuft. Dazu weist der Kolben 5 vorzugsweise in Kolbenmitte einen Verbindungskanal 27 auf, welcher Bestandteil sowohl des Überströmwegs Üz für die Zugstufe als auch des Überströmwegs Ü_{D} für die Druckstufe ist.

Nachfolgend werden lediglich zum Zweck der Veranschaulichung und ohne Beschränkung mögliche Ausführungen der Ventil-Kolbenanordnung an der Kolbenstange 4 näher erläutert. Bei dem dargestellten ersten Ausführungsbeispiel gemäß Figur 3 sind die Hydraulikventile 11 und 12 und das Regelventil 13 auf entgegengesetzten Seiten des Kolbens 5 angeordnet. Der Verbindungskanal 27 verbindet hierbei die Baueinheit 17 und das Regelventil 13 miteinander, so dass die Baueinheit 17 in eine der Arbeitskammern, vorliegend die zweite Arbeitskammer 7, und das Regelventil 13 in die andere der Arbeitskammern, vorliegend die erste Arbeitskammer 6, mündet.

Bei dem ersten Ausführungsbeispiel gemäß Figur 3 ist das Regelventil 13 an einem axialen Endabschnitt 28 der Kolbenstange 4 befestigt. An das gegenüberliegende Ende des Regelventils 13 schließt eine Hülse 29 an, welche sich durch den Kolben 5 hindurch erstreckt und in ihrem Inneren den Verbindungskanal 27 ausbildet.

An einem dem Regelventil 13 gegenüberliegenden Ende der Hülse 29 ist eine Hohlmuffe 30 befestigt. Diese dient gleichzeitig dazu, die Zusatzventile 14 und 15 sowie den Kolben 5 axial festzulegen. Dazu werden zunächst das zweite Zusatzventil 15, anschließend der Kolben 5 und zuletzt das erste Zusatzventilventil 14 auf einen Außenumfangsabschnitt der Hülse 29 axial aufgeschoben. An der Hülse 29 kann hierzu eine entsprechende Schulter 31 ausgebildet sein. Alternativ kann die genannte Baugruppe auch auf Anschlag gegen das Regelventil 13 oder die Kolbenstange 4 aufgeschoben werden. Die axiale Verspannung erfolgt dann mittels der Hohlmuffe 30 welche auf einen Endabschnitt 32 der Hülse 29 aufgeschraubt oder in anderer Art und Weise an dieser befestigt wird. Die Hohlmuffe 30 dient ferner als Halterung für die Baueinheit 17.

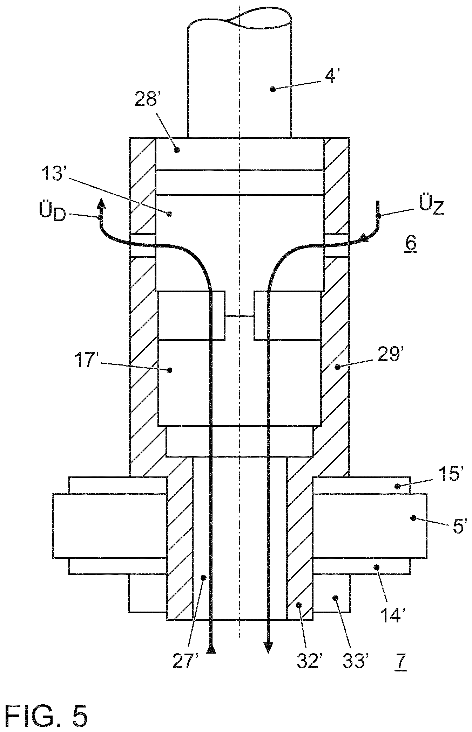

In Abwandlung des in Figur 3 dargestellten Ausführungsbeispiels können, wie in Figur 5 beispielhaft gezeigt, die Baueinheit 17' und das Regelventil 13' in der Ventil-Kolben-Anordnung auch hintereinanderliegend auf der gleichen Seite des Kolbens 5' angeordnet werden. Auch in diesem Fall verlaufen die Überströmwege Üz und Ü_{D} für die Zugstufe und die Druckstufe durch die Baueinheit 17' und das Regelventil 13' über einen gemeinsamen Wegabschnitt durch den Kolben 5'. Der Verbindungskanal 27' durch den Kolben 5' ermöglicht hierbei die hydraulische Verbindung mit der anderen Seite des Kolbens 5'.

In Figur 5 ist das Regelventil 13' an die Kolbenstange 4' angeschlossen, während die Baueinheit 17' mit dem ersten und zweiten Hydraulikventil 11' und 12' zwischen den Kolben 5' und dem Regelventil 13' angeordnet ist. Es ist jedoch auch möglich, die Lage des Regelventils 13' und der Baueinheit 17' zu vertauschen.

Das Regelventil 13' und die Baueinheit 17' sind in einer Hülse 29' aufgenommen, welche ihrerseits an der Kolbenstange 4' befestigt ist. Alternativ kann die Festlegung des Regelventils 13' an der Kolbenstange 4' auch wie in Figur 3 erfolgen, so dass die Hülse 29' dann nur der Verbindung mit der Hydraulikventil-Baueinheit 17' dient. Die Hülse 29' erstreckt sich wiederum durch den Kolben 5', der nebst Zusatzventilen 14' und 15' auf einen Außenumfangsabschnitt wie in Fig. 3 aufgereiht ist.

Die axiale Vorspannung und Festlegung kann mittels einer Mutter 33' vorgenommen werden, welche auf einen axialen Endabschnitt 32' der Hülse 29' aufgeschraubt oder an diesem in sonstiger Weise befestigt wird.

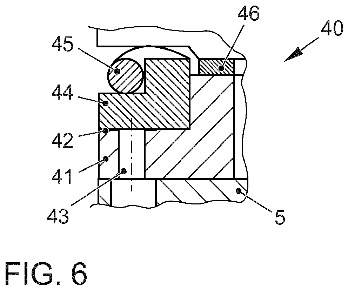

Figur 6 zeigt eine schematische Darstellung eines besonders kompakten und einfach abstimmbaren Zusatzventils 40, welches sowohl als Zusatzventil in der Zugstufe 14 als auch als Zusatzventil in der Druckstufe 15 einsetzbar ist.

Das Zusatzventil 40 umfasst einen ringförmig ausgebildeten Ventilkörper 41 mit einem Ventilsitz 42 und einer oder mehreren Drosselöffnungen 43 sowie ferner ein ringförmig ausgebildetes Schließorgan 44, welches in Schließstellung mittels mindestens einer Feder 45 gegen den Ventilsitz 42 des Ventilkörpers 41 gedrückt ist, um die eine oder mehreren Drosselöffnungen 43 zu versperren.

Die Feder 45 ist bevorzugt eine ringförmig ausgebildete Wellfeder, wobei auch mehrere Wellfedern in Reihe geschaltet sein können.

Weiterhin ist mindestens eine Distanzscheibe 46 zur Einstellung der Vorspannkraft der Feder 45 vorgesehen. Über die Dicke der Distanzscheibe 46 oder eines Distanzscheibenpakets aus mehreren Distanzscheiben 46 kann der Öffnungspunkt des Zusatzventils 40 sehr genau eingestellt werden. Hierdurch lassen sich Geometrieabweichungen und Schwankungen der Federsteifigkeit kompensieren. Dadurch ist es möglich, das Zusatzventil 40 beispielsweise sehr genau auf Nichtlinearitäten im Öffnungsverlauf des Regelventils 13 abzustimmen, um solche Nichtlinearitäten, wie den oben beschriebenen Knick bei Zuschaltung eines zusätzlichen Öffnungsquerschnitts im Regelventil 13, auf hydraulischem Wege zu kompensieren. Zudem kann hierdurch auf einfache Art und Weise eine Anpassung an unterschiedliche Bodenventile 10 vorgenommen werden.

Ein solches Zusatzventil 40 kann als Einheit vormontiert werden und auf die Hülse 29 aufgeschoben werden.

Zur Abstimmung einer Ventil-Kolben-Anordnung kann das Öffnungs- und Schließverhalten der Zusatzventile 14 und 15 in Bezug auf die Hydraulikventile 11 und 12 sowie das Regelventil 13 über verschiedene Einflussparameter eingestellt werden, nämlich über:
- die Anzahl und/oder den Querschnitt der Drosselöffnungen, so dass die Druckangriffsflächen als Wirkungsquerschnitt variabel gestaltet werden können,
- die Distanzscheibendicke und/oder die Anzahl von Distanzscheiben, wodurch die Federvorspannung schnell variiert werden kann,
- die Steifigkeit der mindestens einen Wellfeder, welche beispielsweise durch unterschiedliche Drahtdurchmesser variiert werden kann, sowie die Anzahl der Wellfedern.

Insbesondere kann durch die Verwendung verschiedener Federn 45 die Kennliniensteigung des Ventilverbunds variiert werden. Dies beinhaltet sowohl die Verwendung von Einzelfedern mit unterschiedlicher Federsteifigkeit als auch die Zusammensetzung unterschiedlicher Federpakete.

Durch die Verwendung eines Distanzscheibenbaukastens kann die Federvorspannung und somit der Öffnungspunkt des Zusatzventils 40 variabel abgestimmt werden.

Hierdurch wird es möglich, die Zusatzfedern 14 und 15 möglichst weich und streuungsarm ausführen und schnell auf geänderte Fahrzeugparameter zu reagieren.

In den Ausführungsbeispielen ergibt sich ein im Hinblick auf Fertigung und Montage einfacher Aufbau mit gleichzeitig besonders schlanker Ausführung der Ventil-Kolben-Anordnung sowie eines mit einer solchen ausgestatteten Schwingungsdämpfers 1. Insbesondere können der Kolben 5 und das Innenrohr 3 mit besonders geringem Durchmesser ausgeführt werden. Die Zusatzventile 14 und 15 ermöglichen aufgrund ihrer Schutzfunktion für das Regelventil 13 den Einsatz eines besonders kompakt dimensionierten Regelventils 13. Da letzteres innerhalb des Arbeitsraumes untergebracht wird, werden Schaltgeräusche durch das umgebende Dämpfungsmedium akustisch gedämpft.

Ein Überlastschutz für das innenliegende Regelventil 13 wird durch die Parallelschaltung der Zusatzventile 14 und 15 und den damit verbundenen Volumenstrombypass gewährleistet.

Ferner können die Zusatzventile 14 und 15 nicht nur bei hohen Volumenströmen, sondern bereits im normalen alltäglichen Fahrbereich arbeiten, um die Dämpferkennlinien in der Zug-und Druckstufe, welche vorwiegend durch das erste Hydraulikventile 11 und das weitere Ventil 10b bestimmt werden, zu modifizieren.

Insbesondere kann ein aus der Betriebsweise eines Regelventils 13 mit großem Arbeitsbereich resultierender Kennlinienknick auf hydraulischem Wege ausgerundet werden, so dass das Regelventil 13 und die Zusatzventile 14 und 15 im Zusammenspiel mit den kennlinienprägenden Hydraulikventilen 10b und 11 eine passiven Schwingungsdämpfern ähnliche konventionelle Kennlinie und somit ein akzeptiertes Fahrverhalten bereitstellen.

Durch die Entlastung im Arbeitsbereich werden kavitationsverursachende Bereiche der Druckstufe hydraulisch umgangen, ohne den Arbeitsbereich der Zugstufe zu limitieren. Eine softwaretechnische Umgehung ist nicht mehr notwendig und das Regelventil 13 verhält sich stetig, d.h. ohne harte Änderungen "von jetzt auf gleich" wie bei einer Softwarelösung.

Die Erfindung wurde vorstehend anhand verschiedener Ausführungsbeispiele und Abwandlungen näher erläutert. Insbesondere können technische Einzelmerkmale, welche oben im Kontext weiter Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele beschränkt, sondern umfasst alle durch die Patentansprüche definierten Ausgestaltungen.

### Bezugszeichenliste

- 1: Schwingungsdämpfer
- 2: Behälter
- 3: Innenrohr
- 4: Kolbenstange
- 5: Kolben
- 6: erste Arbeitskammer
- 7: zweite Arbeitskammer
- 8: Kolbenstangenführung
- 9: Ausgleichsraum
- 10: Bodenventil
- 10a: erstes Ventil
- 10b: zweites Ventil
- 10c: Voröffnungsquerschnitt
- 11: erstes Hydraulikventil
- 12: zweites Hydraulikventil
- 13: Regelventil
- 14: erstes Zusatzventil
- 15: zweites Zusatzventil
- 16: Voröffnungsquerschnitt
- 17: Hydraulikventileinheit
- 18: Ventilscheibe
- 19: Ventilscheibe
- 20: Voröffnungsscheibe
- 23: Feder
- 24: Feder
- 25: Überströmkanal
- 26: Überströmkanal
- 27: Verbindungskanal durch den Kolben 5
- 28: axialer Endabschnitt der Kolbenstange
- 29: Hülse
- 30: Hohlmuffe
- 31: Schulter
- 32: axialer Endabschnitt der Hülse
- 33: Mutter
- 40: Zusatzventil
- 41: Ventilkörper
- 42: Ventilsitz
- 43: Drosselöffnung
- 44: Schließorgan
- 45: Wellfeder
- 46: Distanzscheibe
- B_{D}: Betriebsbereich Druckstufe
- B_{Z}: Betriebsbereich Zugstufe
- B_{D}*: Bereich bei später öffnendem zweiten Hydraulikventil
- B_{Z}*: Überlastbereich
- Dₘₐₓ: härteste Federkennlinie in der Druckstufe
- Dₘᵢₙ: weichste Federkennlinie in der Druckstufe
- S_{D}: Kennlinienspreizung in der Druckstufe
- S_{Z}: Kennlinienspreizung in der Zugstufe
- S_{D}: Festigkeitsgrenze des Regelventils in der Druckstufe
- S_{Z}: Festigkeitsgrenze des Regelventils in der Zugstufe
- Ü_{Z}: Überströmweg Zugstufe via Regelventil
- Ü_{D}: Überströmweg Druckstufe via Regelventil
- Ü_{BZ}: Überströmweg Zugstufe via erstes Zusatzventil
- Ü_{BD}: Überströmweg Druckstufe via zweites Zusatzventil
- v_{Z}: Kolbengeschwindigkeit
- v_{D}: Kolbengeschwindigkeit
- Zₘₐₓ: härteste Federkennlinie in der Zugstufe
- Zₘᵢₙ: weichste Federkennlinie in der Zugstufe

## Patentansprüche

1. Schwingungsdämpfer (1), umfassend:
einen Behälter (2),
ein Innenrohr (3), das in dem Behälterrohr (2) angeordnet ist und einen Arbeitsraum bereitstellt,
eine in das Innenrohr (3) eintauchende Kolbenstange (4), und
einen an der Kolbenstange (4) angeordneten Kolben (5) zur Unterteilung eines Arbeitsraumes des Schwingungsdämpfers in eine erste Arbeitskammer (6) und eine zweite Arbeitskammer (7),
ein erstes Hydraulikventil (11) für die Zugstufe des Schwingungsdämpfers und ein zweites Hydraulikventil (12) für die Druckstufe des Schwingungsdämpfers sowie ein zu diesen in Reihe geschaltetes Regelventil (13) zur Anordnung in dem Arbeitsraum des Schwingungsdämpfers, um im bestimmungsgemäßen Betriebsbereich des Schwingungsdämpfers ein Überströmen eines Dämpfungsmediums zwischen der ersten und zweiten Arbeitskammer (6, 7) sowohl in der Zugstufe als auch in der Druckstufe des Schwingungsdämpfers zu beeinflussen,
ein erstes Zusatzventil (14) für die Zugstufe und ein zweites Zusatzventil (15) für die Druckstufe, welche zur Verbindung der ersten und zweiten Arbeitskammer (7) an dem Kolben (5) angeordnet und zu dem ersten Hydraulikventil, dem zweiten Hydraulikventil und dem Regelventil (13) parallelgeschaltet sind,
ein weiteres Ventil (10b), das zwischen dem Innenrohr (3) und dem Behälterrohr (2) angeordnet ist,
**dadurch gekennzeichnet, dass**
das erste und zweite Zusatzventil (14, 15) als Überlastventile zum Schutz des Regelventils (13) in Bezug auf eine Überlastschwelle des Regelventils (13) konfiguriert sind und
weiterhin zumindest das zweite Zusatzventil (15) für die Druckstufe einen der Überlastschwelle des Regelventils (13) vorgelagerten Arbeitsbereich aufweist, welcher den Arbeitsbereich des weiteren Ventils (10b) überlappt, um das durch das weitere Ventil (10b) sowie das Regelventil (13) im bestimmungsgemäßen Betriebsbereich des Schwingungsdämpfers bestimmte Dämpfungsverhalten in der Druckstufe zu beeinflussen.

2. Schwingungsdämpfer nach Anspruch 1, **dadurch gekennzeichnet, dass** die in der Druckstufe wirksamen Ventile (10b, 12, 15) derart abgestimmt sind, dass der Gesamtdruckverlust an dem zweiten Hydraulikventil (12) und dem zweiten Zusatzventil (15) zusammen kleiner ist als der Druckverlust an dem weiteren Ventil (10b).

3. Schwingungsdämpfer nach Anspruch 1 oder 2, **dadurch gekennzeichnet, dass** das zweite Zusatzventil (15) bei kleineren Beträgen des Differenzdrucks zwischen den Arbeitskammern (6, 7) öffnet als das erste Zusatzventil.

4. Schwingungsdämpfer nach einem der Ansprüche 1 bis 3, **dadurch gekennzeichnet, dass** das erste und zweite Zusatzventil (14, 15) derart konfiguriert sind, um im Regelbereich des Regelventils (13) bereits bei einem Differenzdruck zu öffnen, welcher von einer Überlastschwelle, welche zum Schutz des Regelventils (13) erforderlich ist, beabstandet ist.

5. Schwingungsdämpfer nach einem der Ansprüche 1 bis 4, **dadurch gekennzeichnet, dass** das erste Hydraulikventil (11), das weitere Ventil (10b) und die Zusatzventile (14, 15) derart aufeinander abgestimmt sind, dass im Parallelbetrieb innerhalb des bestimmungsgemäßen Betriebsbereichs des Schwingungsdämpfers der Hauptvolumenstrom über das erste Hydraulikventil (11) oder das weitere Ventil (10b) geführt ist.

6. Schwingungsdämpfer nach einem der Ansprüche 1 bis 5, **dadurch gekennzeichnet, dass** das erste Hydraulikventil (11), das weitere Ventil (10b) und Zusatzventile (14, 15) derart aufeinander abgestimmt sind, dass das erste Hydraulikventil (11) in der Zugstufe vor dem zugehörigen ersten Zusatzventil (14) öffnet und das weitere Ventil (10b) in der Druckstufe vor dem zugehörigen zweiten Zusatzventil (15) öffnet.

7. Schwingungsdämpfer nach einem der Ansprüche 1 bis 6, **dadurch gekennzeichnet, dass** das Regelventil (13) derart ausgebildet ist, dass dieses ab einer bestimmten Kolbengeschwindigkeit einen weiteren Querschnitt frei schaltet, und dass die Zusatzventile (14, 15) derart abgestimmt sind, um durch Freigabe eines entsprechenden Öffnungsquerschnitts im Bereich eines durch die vorgenannte Querschnittsfreischaltung verursachten Knicks der Dämpferkennlinie eine Kennlinienausrundung zu bewirken.

8. Schwingungsdämpfer nach einem der Ansprüche 1 bis 4, dass das erste Zusatzventil (14) lediglich als Überlastventil für das Regelventil (13) in der Zugstufe dient.

9. Schwingungsdämpfer nach einem der Ansprüche 1 bis 8, **dadurch gekennzeichnet, dass** die härteste Kennlinie (Zₘₐₓ) in der Zugstufe durch das erste Zusatzventil (14) und die weichste Kennlinie (Zₘᵢₙ) in der Zugstufe bei geöffnetem Regelventil (13) durch das erste Hydraulikventil (11) definiert wird, und über das Regelventil (13) eine Kennlinie zwischen der weichsten und härtesten Kennlinie (Zₘₐₓ, Zₘᵢₙ) einstellbar ist;
und/oder
die härteste Kennlinie (Dₘₐₓ) in der Druckstufe durch das zweite Zusatzventil (15) und die weichste Kennlinie (Dₘᵢₙ) in der Druckstufe durch das weitere Ventil (10b) definiert wird.

10. Schwingungsdämpfer nach einem der Ansprüche 1 bis 9, **dadurch gekennzeichnet, dass** mindestens eines der Zusatzventile (14, 15, 40) umfasst:
- einen ringförmig ausgebildeten Ventilkörper (41) mit einem Ventilsitz (42) und einer oder mehreren Drosselöffnungen (43),
- mindestens eine Feder (45), und
- ein ringförmig ausgebildetes Schließorgan (44), welches in Schließstellung durch die Feder (45) gegen den Ventilsitz (42) des Ventilkörpers (41) gedrückt ist, um die eine oder mehreren Drosselöffnungen (43) zu versperren.

11. Schwingungsdämpfer nach Anspruch 10, **dadurch gekennzeichnet, dass** die Feder (45) eine ringförmig ausgebildete Wellfeder ist oder mindestens eine ringförmig ausgebildete Wellfeder aufweist.

12. Schwingungsdämpfer nach Anspruch 10 oder 11, **dadurch gekennzeichnet, dass** das betreffende Zusatzventil (14, 15, 40) weiterhin mindestens eine Distanzscheibe (46) zur Einstellung der Vorspannkraft der mindestens einen Wellfeder (45) aufweist.

13. Verfahren zur Abstimmung eines Schwingungsdämpfers nach einem der Ansprüche 10 bis 12, **dadurch gekennzeichnet, dass** das Öffnungs- und Schließverhalten der Zusatzventile (14, 15) in Bezug auf das erste Hydraulikventil (11) und das weitere Ventil (10b) abgestimmt wird durch:
- die Anzahl und/oder den Querschnitt der Drosselöffnungen (43), und/oder
- die Dicke der Distanzscheibe (46) und/oder Anzahl von Distanzscheiben, und/oder
- die Steifigkeit der mindestens einen Wellfeder (45).

## Claims

1. Vibration damper (1), comprising
a reservoir (2),
an inner tube (3) which is arranged in the reservoir tube (2) and provides a working space,
a piston rod (4) which dips into the inner tube (3), and
a piston (5) which is arranged on the piston rod (4) for dividing a working space of the vibration damper into a first working chamber (6) and a second working chamber (7),
a first hydraulic valve (11) for the rebound stage of the vibration damper and a second hydraulic valve (12) for the compression stage of the vibration damper, and a control valve (13) which is connected in series with respect to these hydraulic valves for arranging in the working space of the vibration damper, in order, in the intended operating range of the vibration damper, to influence an overflow of damping medium between the first and the second working chamber (6, 7) both in the rebound stage and in the compression stage of the vibration damper,
a first additional valve (14) for the rebound stage and a second additional valve (15) for the compression stage,
which additional valves are arranged on the piston (5) for connecting the first and second working chamber (7) and are connected in parallel to the first hydraulic valve, the second hydraulic valve and the control valve (13),
a further valve (10b) which is arranged between the inner tube (3) and the reservoir tube (2),
**characterized in that**
the first and second additional valve (14, 15) are configured as overload valves for protecting the control valve (13) in relation to an overload threshold of the control valve (13), and,
furthermore, at least the second additional valve (15) for the compression stage has a working range which is positioned ahead of the overload threshold of the control valve (13) and overlaps the working range of the further valve (10b), in order to influence the damping behaviour in the compression stage, which damping behaviour is determined by way of the further valve (10b) and the control valve (13) in the intended operating range of the vibration damper.

2. Vibration damper according to Claim 1, **characterized in that** the valves (10b, 12, 15) which are active in the compression stage are balanced in such a way that the overall pressure loss at the second hydraulic valve (12) and the second additional valve (15) together is smaller than the pressure loss at the further valve (10b).

3. Vibration damper according to Claim 1 or 2, **characterized in that** the second additional valve (15) opens smaller magnitudes of the differential pressure between the working chambers (6, 7) than the first additional valve.

4. Vibration damper according to one of Claims 1 to 3, **characterized in that** the first and second additional valve (14, 15) are configured so as to already open, in the control range of the control valve (13), at a differential pressure which is spaced apart from an overload threshold which is required for the protection of the control valve (13).

5. Vibration damper according to one of Claims 1 to 4, **characterized in that** the first hydraulic valve (11), the further valve (10b) and the additional valves (14, 15) are balanced with one another in such a way that, in parallel operation within the intended operating range of the vibration damper, the main body metric flow is conducted via the first hydraulic valve (11) or the further valves (10b).

6. Vibration damper according to one of Claims 1 to 5, **characterized in that** the first hydraulic valve (11), the further valve (10b) and additional valves (14, 15) are balanced with one another in such a way that the first hydraulic valve (11) in the rebound stage opens ahead of the associated first additional valve (14), and the further valve (10b) in the compression stage opens ahead of the associated second additional valve (15).

7. Vibration damper according to one of Claims 1 to 6, **characterized in that** the control valve (13) is configured such that it opens a further cross section from a defined piston speed, and **in that** the additional valves (14, 15) are balanced so as to bring about characteristic curve smoothing in the region of a kink, caused by the abovementioned cross section opening, of the damper characteristic curve by way of opening of a corresponding opening cross section.

8. Vibration damper according to one of Claims 1 to 4, **characterized in that** the first additional valve (14) serves merely as an overload valve for the control valve (13) in the rebound stage.

9. Vibration damper according to one of Claims 1 to 8, **characterized in that** the hardest characteristic curve (Zₘₐₓ) in the rebound stage is defined by way of the first additional valve (14), and the softest characteristic curve (Zₘᵢₙ) in the rebound stage in the case of an open control valve (13) is defined by way of the first hydraulic valve (11), and a characteristic curve between the softest and hardest characteristic curve (Zₘₐₓ, Zₘᵢₙ) can be set via the control valve;
and/or
the hardest characteristic curve (Dₘₐₓ) in the compression stage is defined by way of the second additional valve (15), and the softest characteristic curve (Dₘᵢₙ) in the compression stage is defined by way of the further valves (10b) .

10. Vibration damper according to one of Claims 1 to 9, **characterized in that** at least one of the additional valves (14, 15, 40) comprises:
- a valve body (41) of annular configuration with a valve seat (42) and one or more throttle openings (43),
- at least one spring (45), and
- a closing member (44) of annular configuration which, in the closed position, is pressed by way of the spring (45) against the valve seat (42) of the valve body (41), in order to shut off the one or more throttle openings (43).

11. Vibration damper according to Claim 10, **characterized in that** the spring (45) is a corrugated spring of annular configuration or at least one corrugated spring of annular configuration.

12. Vibration damper according to Claim 10 or 11, **characterized in that** the relevant additional valve (14, 15, 40) has, furthermore, at least one spacer disc (46) for setting the preload force of the at least one corrugated spring (45).

13. Method for balancing a vibration damper according to one of Claims 10 to 12, **characterized in that** the opening and closing behaviour of the additional valves (14, 15) is balanced in relation to the first hydraulic valve (11) and the further valve (10b) by way of:
- the number and/or the cross section of the throttle openings (43), and/or
- the thickness of the spacer disc (46) and/or the number of spacer discs, and/or
- the stiffness of the at least one corrugated spring (45).

## Revendications

1. Amortisseur de vibrations (1), comprenant
un contenant (2),
un tube intérieur (3) qui est disposé dans le tube formant contenant (2) et qui fournit un espace de travail,
une tige de piston (4) plongeant dans le tube intérieur (3), et
un piston (5) disposé sur la tige de piston (4) et destiné à diviser un espace de travail de l'amortisseur de vibrations en une première chambre de travail (6) et une deuxième chambre de travail (7),
une première soupape hydraulique (11) destinée à la phase de traction de l'amortisseur de vibrations et une deuxième soupape hydraulique (12) destinée à la phase de compression de l'amortisseur de vibrations et une soupape de régulation (13) montée en série avec celles-ci destinée à être disposée dans l'espace de travail de l'amortisseur de vibrations afin d'influer, dans la zone de fonctionnement prévue de l'amortisseur de vibrations, sur un débordement d'un milieu d'amortissement entre la première et la deuxième chambre de travail (6, 7) aussi bien dans la phase de traction que dans la phase de compression de l'amortisseur de vibrations,
une première soupape supplémentaire (14) destinée à la phase de traction et une deuxième soupape supplémentaire (15) destinée à la phase de compression, lesquelles sont disposées sur le piston (5) pour relier les première et deuxième chambres de travail (7) et sont montées en parallèle avec la première soupape hydraulique, la deuxième soupape hydraulique et la soupape de régulation (13),
une autre soupape (10b) qui est disposée entre le tube intérieur (3) et le tube formant contenant (2), **caractérisé en ce que**
les première et deuxième soupapes supplémentaires (14, 15) sont conçues comme des soupapes de surcharge destinées à protéger la soupape de régulation (13) par rapport à un seuil de surcharge de la soupape de régulation (13) et
en outre au moins la deuxième soupape supplémentaire (15) destinée à la phase de compression comporte une zone de travail qui est située en amont du seuil de surcharge de la soupape de régulation (13) et qui chevauche la zone de travail de l'autre soupape (10b) afin d'influer sur le comportement d'amortissement dans la phase de compression qui est déterminé par l'autre soupape (10b) et la soupape de régulation (13) dans la zone de fonctionnement prévue de l'amortisseur de vibrations.

2. Amortisseur de vibrations selon la revendication 1, **caractérisé en ce que** les soupapes (10b, 12, 15) opérantes dans la phase de compression sont adaptées de telle sorte que la perte de charge totale au niveau de la deuxième soupape hydraulique (12) et de la deuxième soupape supplémentaire (15) conjointement soit inférieure à la perte de pression au niveau de l'autre soupape (10b).

3. Amortisseur de vibrations selon la revendication 1 ou 2, **caractérisé en ce que** la deuxième soupape supplémentaire (15) s'ouvre pour des valeurs de pression différentielle entre les chambres de travail (6, 7) qui sont inférieures à celles de la première soupape supplémentaire.

4. Amortisseur de vibrations selon l'une des revendications 1 à 3, **caractérisé en ce que** les première et deuxième soupapes supplémentaires (14, 15) sont conçues de manière à s'ouvrir dans la zone de régulation de la soupape de régulation (13) pour une pression différentielle qui est distante d'un seuil de surcharge qui est nécessaire pour protéger la soupape de régulation (13).

5. Amortisseur de vibrations selon l'une des revendications 1 à 4, **caractérisé en ce que** la première soupape hydraulique (11), l'autre soupape (10b) et les soupapes supplémentaires (14, 15) sont adaptées entre elles de telle sorte que, en fonctionnement en parallèle dans la zone de fonctionnement prévue de l'amortisseur de vibrations, le débit volumétrique principal est guidé par le biais de la première soupape hydraulique (11) ou de l'autre soupape (10b).

6. Amortisseur de vibrations selon l'une des revendications 1 à 5, **caractérisé en ce que** la première soupape hydraulique (11), l'autre soupape (10b) et les soupapes supplémentaires (14, 15) sont adaptées entre elles de telle sorte que la première soupape hydraulique (11) dans la phase de traction s'ouvre avant la première soupape supplémentaire (14) associée et l'autre soupape (10b) dans la phase de compression s'ouvre avant la deuxième soupape supplémentaire (15) associée.

7. Amortisseur de vibrations selon l'une des revendications 1 à 6, **caractérisé en ce que** la soupape de régulation (13) est conçue pour déconnecter une autre section transversale à partir d'une vitesse de piston déterminée, et **en ce que** les soupapes supplémentaires (14, 15) sont adaptées de manière à provoquer un arrondissage de la courbe caractéristique par libération d'une section d'ouverture correspondante dans la zone d'un coude de la courbe caractéristique de l'amortisseur dû à la déconnection de section transversale susmentionnée.

8. Amortisseur de vibrations selon l'une des revendications 1 à 4, la première soupape supplémentaire (14) servant uniquement de soupape de surcharge pour la soupape de régulation (13) dans la phase de traction.

9. Amortisseur de vibrations selon l'une des revendications 1 à 8, **caractérisé en ce que** la courbe caractéristique la plus dure (Zₘₐₓ) dans la phase de traction est définie par la première soupape supplémentaire (14) et l'autre courbe caractéristique la plus douce (Zₘᵢₙ) dans la phase de traction, lorsque la soupape de régulation (13) est ouverte, est définie par la première soupape hydraulique (11) et une courbe caractéristique entre la courbe caractéristique la plus douce et la courbe caractéristique la plus dure (Zₘₐₓ, Zₘᵢₙ) peut être réglée par le biais de la soupape de régulation (13) ;
et/ou
la courbe caractéristique la plus dure (Dₘₐₓ) dans la phase de compression est définie par la deuxième soupape supplémentaire (15) et la courbe caractéristique la plus douce (Dₘᵢₙ) dans la phase de compression est définie par l'autre soupape (10b).

10. Amortisseur de vibrations selon l'une des revendications 1 à 9, **caractérisé en ce qu'**au moins une des soupapes supplémentaires (14, 15, 40) comprend :
- un corps de soupape annulaire (41) comportant un siège de soupape (42) et une ou plusieurs ouvertures d'étranglement (43),
- au moins un ressort (45), et
- un organe de fermeture annulaire (44) qui, en position fermée, est pressé contre le siège de soupape (42) du corps de soupape (41) par le biais du ressort (45) afin de bloquer les une ou plusieurs ouvertures d'étranglement (43).

11. Amortisseur de vibrations selon la revendication 10, **caractérisé en ce que** le ressort (45) est un ressort ondulé annulaire ou comporte au moins un ressort ondulé annulaire.

12. Amortisseur de vibrations selon la revendication 10 ou 11, **caractérisé en ce que** la soupape supplémentaire concernée (14, 15, 40) comporte en outre au moins un disque d'espacement (46) destiné à régler la force de précontrainte de l'au moins un ressort ondulé (45).

13. Procédé de réglage d'un amortisseur de vibrations selon l'une des revendications 10 à 12, **caractérisé en ce que** le comportement en ouverture et fermeture des soupapes supplémentaires (14, 15) par rapport à la première soupape hydraulique (11) et à l'autre soupape (10b) est adapté par :
- le nombre et/ou la section transversale des ouvertures d'étranglement (43), et/ou
- l'épaisseur du disque d'espacement (46) et/ou le nombre de disques d'espacement, et/ou
- la rigidité de l'au moins un ressort ondulé (45).
